# EUROPEAN PATENT APPLICATION

(11) **EP 0 807 459 A1**
(43) Date of publication of application: **19.11.1997**
(21) Application number: 96201340.5
(22) Date of filing: 15.05.1996
(51) Int. Cl.: B01D 61/36, B01J 29/04

(54) **Method for preparing membranes, said membranes, separation methods using said membranes and the use of said membranes as catalytic membranes**

(71) Applicant: K.U. LEUVEN RESEARCH & DEVELOPMENT, B-3000 Leuven (BE)
(72) Inventor: Vankelecom, Ivo, Frans, Johanna, B-1740 Ternat (BE); Jacobs, Pierre August, B-1755 Gooik (BE); Uytterhoeven, Jan Baptiste, B-3001 Leuven (BE)
(74) Representative: Eveleens Maarse, Pieter

(57) **Abstract**

The present invention relates to a novel type of composite membrane comprising of a polymer membrane comprising a filler with meso- and/or macropores, the preparation of these membranes, the use of membranes in separation methods and the use of said membranes as catalytic membranes. In particular this invention relates to a method for preparing membranes containing a filler having pores in the meso and/or macro region, comprising the steps of: providing a partially polymerized membrane matrix; adding the filler to the partially polymerized membrane matrix; forming a substantially homogenous distribution of the filler in the partially polymerized matrix; casting of the membrane; and curing the membrane.

## Description

The present invention relates to a novel type of composite membrane comprising of a polymer membrane comprising a filler with meso- and/or macropores, the preparation of these membranes, the use of membranes in separation methods and the use of said membranes as catalytic membranes.

Within membrane technology, pervaporation is one of the newest and most expanding processes. In pervaporation, a liquid is maintained at atmospheric pressure on the feed side, whereas a low vapour pressure at the permeate side provides the driving force for the molecular transport (Mulder, 1991). This way, pervaporation is a continuous process with low energy consumption in which separation is based on differences in solubility of the compounds in the membrane and diffusion of them through it. Two main classes of membranes can be distinguished in pervaporation: hydrophilic and organophilic membranes. For the former class, large scale industrial plants work satisfactorily since 1982 (Néel, 1991). The breakthrough of organophilic membranes on industrial scale is more difficult as commercially available membranes lack sufficient separation power (defined as a combination of flux and selectivity; Duval, 1991). The search for better performing organophilic membranes is therefore still most wanted. Herein, two pathways can be followed: new polymeric materials can be synthesized or existing polymeric materials can be improved by incorporating fillers. Reported invention frames within the latter approach.

Only very recently, composite membranes containing fillers dispersed in polymeric materials, have gained renewed interest even though the fist attempt to combine zeolites with different organic polymers dates from 1960 already (Barrer and James). It was te Hennepe et al. in 1986 who incorporated silicalite in PDMS (PolyDiMethylSiloxane) in order to improve the selectivity of PDMS-membranes in the pervaporation of aqueous alcohol solution (te Hennepe et al., 1986 and 1988). In contrast to Barrer and James who prepared the composite membranes by compression moulding of mixtures of finely powdered polymers and zeolite crystals, another procedure was used here in which a suspension of zeolite and polymer was made in an appropriate solvent, as described before by Paul and Kemp (1973). After stirring, the films were cast as a thin layer, after which evaporation of the solvent and curing of the polymer at a suitable temperature finished the film.

The main bottlenecks in the preparation method were the difficult dispersion of the zeolite in the prepolymer solution and the lack of adhesion between the filler and the organic matrix. In 1992, Jia improved this dispersion of zeolite crystals in PDMS-solution. A homogeneous suspension was realized by using a highly diluted mixture of prepolymer and zeolite in iso-octane. The dispersion was stabilized by heating the suspension at 70 °C for 2 hours, which allowed a partially PDMS-polymer to be formed, keeping the zeolite dispersed well during subsequent membrane curing. Ultra-thin membranes (only 3 µm thickness) with extremely high zeolite loadings (up to 77 Wt%) were realized this way. The use of ultra-fine zeolite crystallites, the highly diluted suspension of the zeolite and the prepolymerisation of PDMS in iso-octane were considered to be essential.

Several publications reveal the role of the zeolite filler in the membrane process. te Hennepe (1988) and Jia (1991) in pervaporation and gas separation respectively, found indications for a physical crosslinking action of the zeolite filler on the silicone rubber, which was proven later by Vankelecom et al.(1994). By incorporating zeolites in polymers, many different aspects of zeolite chemistry have been brought to expression in the composite membrane: the ion-exchange capacity (Barrer and James (1960), the sorption capacity (Paul and Kemp, 1973), the molecular sieving effect (Jia, 1991) and the hydrophobic/hydrophilic character of the zeolite (te Hennepe, 1988) to name a few. The latter effect explains the success of the only composite membrane commercially available these days. It is supplied by the GFT-company (Le Carbone, Neunkirchen, Germany) and is constituted of a silicalite filled PDMS-membrane. The increased hydrophobicity of the composite membrane augments the selectivity in the removal of several organics from aqueous solution. However, the molecular sieving effect - inherently imposed by the hydrophobic filler on the permeating compounds - negatively affects separations if diffusion of the organic compound through the polymer exceeds diffusion in the filler. This is especially encountered when the composite membranes are applied in the removal of large organic molecules from water (Lamer et al., 1992). It was found that molecules even as small as n-butanol (Vankelecom et al., 1995) and CCl₄ (Dotremont et al., 1995) exhibited higher pervaporation fluxes in unfilled PDMS than in silicalite filled PDMS.

Apart from zeolites (several patents by Sterzel and Sanner, 1985 and 1990; te Hennepe, 1986; Kulprathipanja et al., 1988a and b; Rojey et al., 1989), only a limited amount of other materials have been incorporated in polymeric membranes. Crystalline carries were incorporated to improve the transport of low molecular weight substances (Sterzel and Sanner, 1985 an 1990). Carbon molecular sieves were also incorporated (Duval, 1993), but as the pores of these fillers were dead ended, no improved membrane performance could be realized. All above mentioned literature concerns polymers filled with microporous structures. No literature is available concerning membranes in which meso- or macroporous fillers are incorporated. First attempts failed since the uncured polymer chains sorbed in the large pores of the fillers during the preparation of the dispersion. By consequence, the subsequent polymer curing failed and no strong polymer networks could be formed.

Accordingly, an object of the present invention is to provide a method to prepare polymer films loaded with fillers having pores in the meso- and macropore region.

Accordingly the present invention provides a method for preparing membranes containing filler having pores in the meso and/or macro region, comprising the steps of:
i) providing a partially polymerized membrane matrix;
ii) adding the filler to the partially polymerized membrane matrix;
iii) forming a substantially homogenous distribution of the filler in the partially polymerized matrix;
iv) casting the membrane; and
v) curing the membrane.
Using these methods according to the invention it is avoided that polymer intrudes in the meso and/or macropores. Intrusion would have resulted in a bad curing of the membrane and in a partial or complete blocking of the pores. According to the IUPAC-guidelines mesopores have a pore diameter between 2 and 50 nm. Macropores have pore diameter as from 50 nm.

In order to obtain a good dispersion and distribution of the filler in the partially polymerized matrix, prepolymerization should have been carried out such that neither settling or inproper distribution/dispersion occurs. By routine experiments prepolymerization time, prepolymerization temperature and - if appropriate - the solvent are selected and optimized. Variables in this optimization process are the hydrophobic/hydrophilic character of filler and polymer, the partical size and pore distribution of the filler.

If desired, the filler has a hydrophobic surface character. If the filler is hydrophilic or insufficiently hydrophobic, the hydrophobic character may be improved. According to an embodiment of the present inventions the filler is imparted with a hydrophobic surface character by treatment with a hydrophobic agent.

Best pervaporation results were obtained after silylating the fillers with trimethylsilylgroups to increase their hydrophobic character. One of the discoveries forming the basis of the invention is that under certain circumstances a polymer structure can be formed in which meso- or macroporous structures can be kept in a stable dispersion.

The prepolymerization times are normally between 5 minutes and 24 hours, in general between 15 minutes and 1 hour. The prepolymerization temperature is between room temperature and 200 °C. The upper limit is such that the solvent is not boiling. In general the prepolymerization temperature lies between room temperature and 80 °C.

The prepolymer concentration is such that the filler is not settling until pouring. Accordingly the prepolymer concentration is normally between 5 vol% and 25 vol%. Generally it is between 1-100 vol%. The PDMS used in the examples of the invention was supplied by General Electric (RTV-615) in the form of separate prepolymer (RTV-615A) and crosslinker (RTV-615B) carrying terminal vinyl groups or hydride groups respectively. We found out that an optimized prepolymerisation step, allowing both PDMS-compounds to crosslink in the absence of filler, could realize a polymer network suitable for dispersion of porous structures. Firstly, this network was strong enough to keep the fillers dispersed once added to the mixture, and secondly it had a viscosity low enough to allow a homogeneous filler dispersion. Incorporated fillers were amorphous silicas, prepared following the sol-gel method and macroporous carbon blacks. Aiming at the pervaporation of organics from aqueous solutions, the fillers were treated with silylating agents (such as TMCS (TriMethylChloroSilane)) before incorporation to increase their hydrophobic character.

Resulting membranes showed most interesting performance in the removal of organics by pervaporation. Transport in this process can be described by the sorption-diffusion model (Mulder, 1991). The hydrophobic character of the filler increases the sorption of the organic compound in the filler - and consequently in the whole composite membrane - while sorption of water is drastically lowered. At the same time, the large pores in the fillers keep diffusion fast enough, even for extremely large molecules.

It is also possible to provide a filler with a catalytic character. According to an embodiment of the present invention the filler is a mesoporous titanium silicate.

The solvent should dissolve both PDMS-compounds completely to enable the prepolymerisation. Most apolar solvents are suitable for this. Furthermore, the filler has to be dispersed perfectly in this highly diluted prepolymerised mixture. A filler dependent best solvent was found: methyl isobutyl ketone (MIBK) for zeolite Y incorporation, chloroform for silicalite, silicas and ultra stabilized zeolite Y, to name a few.

Both the prepolymerisation time and the concentration of PDMS in the appropriate solvent have to be optimized, depending on the properties of the fillers, especially their size. The polymer network formed during the polymerization should be sufficiently strong to keep the particles dispersed without sedimenting. On the other hand, a too strongly polymerized network would not longer allow a good mixing of the fillers added later on.

### Example 1: Preparation of silica

75 ml TEOS (tetraethyl orthosilicate) is added to 150 ml of water, brought on pH = 2 by adding HCl. After stirring overnight, this sol is titrated to pH = 6 with a 25 Wt% ammonium solution. The synthesized silica is dried at 120 °C for 24 hours, after which it is grinded in a ball mill to obtain a fine powder which was sieved (pore diameter = 0.14 mm) and calcined at 400 °C during 12 hours.

### Example 2: Preparation of silica silylated with trimethylchlorosilane (TMCS)

Per gram silica, prepared as in example 1, 10 ml toluene (dried over zeolite A) is mixed in a glass bottle as well as 6 mmol of silylating agent. The bottle is closed, purged with nitrogen and stirred during 90 minutes. The silylated silica is filtered off and dried at 180 °C under vacuo overnight.

### Example 3: PDMS membrane prepared as reference system, containing no filler (see table 1)

The PDMS-polymer is formed by adding RTV-615B and RTV-615A, respectively crosslinker and prepolymer, in a weight ratio of 1/10. The polymer is prepared as an 8 vol% solution in chloroform, which is first stirred at 70 °C for 1 hour and then at room temperature for another hour. The solution is cast in a thoroughly cleaned petri dish from which the solvent is evaporated overnight. Final curing of the dried membrane is performed under vacuo at 150 °C during 45 minutes.

### Example 4: Composite membrane prepared as reference system, containing a hydrophobic microporous structure (see table 1)

The PDMS-polymer is formed by adding RTV-615B and RTV-615A, respectively crosslinker and prepolymer, in a weight ratio of 1/10. The polymer is prepared as an 8 vol% solution in chloroform, which is first stirred at 70 °C for 1 hour. Silicalite (CBV-2802, PQ-Corporation, pretreated at 150 °C under vacuo during 90 minutes and sieved (pore diameter = 0.16 mm)) is then added to obtain a 30 Wt% loading, after which the mixture is stirred for another hour at room temperature. The solution is cast in a thoroughly cleaned petri dish from which the solvent is evaporated overnight. Final curing of the dried membrane is performed under vacuo at 150 °C during 45 minutes.

### Example 5: Composite membrane prepared according to the invention, containing no filler (see table 1)

The PDMS-polymer is formed by adding RTV-615B and RTV-615A, respectively crosslinker and prepolymer, in a weight ratio of 1/10. The polymer is prepared as a 15 vol% solution in chloroform, which is stirred at 70 °C for 1 hour and then for another hour at room temperature. The solution is cast then in a thoroughly cleaned petri dish from which the solvent is evaporated overnight. Final curing of the dried membrane is performed under vacuo at 150 °C during 45 minutes.

### Example 6: Composite membrane prepared according to the invention, containing silica as filler (see table 1)

The PDMS-polymer is formed by adding RTV-615 B and RTV-615A, respectively crosslinker and prepolymer, in a weight ratio of 1/10. The polymer is prepared as a 15 vol% solution in chloroform, which is stirred at 70 °C for 1 hour. Silica, prepared according to example 1, is then added to realise a 25 wt% loading of the composite membrane. Hereafter, the mixture is stirred for another hour at room temperature. The solution is cast then in a thoroughly cleaned petri dish from which the solvent is evaporated overnight. Final curing of the dried membrane is performed under vacuo at 150 °C during 45 minutes.

### Example 7: Composite membrane prepared according to the invention, containing active carbon as filler (see table 1)

The PDMS-polymer is formed by adding RTV-615B and RTV-615A, respectively crosslinker and prepolymer, in a weight ratio of 1/10. The polymer is prepared as an 8 vol% solution in chloroform, which is stirred at 70 °C for 1 hour. Carbon black (Degussa) is then added to realize a 25 Wt% loading, after which the mixture is stirred for another hour at room temperature. The solution is cast then in a thoroughly cleaned petri dish from which the solvent is evaporated overnight. Final curing of the dried membrane is performed under vacuo at 150 °C during 45 minutes.
The carbon black was pretreated at 150 °C under vacuo during 90 minutes and sieved (pore diameter = 0.16 mm) before adding to the prepolymer solution.

### Example 8: Composite membrane prepared according to the invention, containing silylated silica as filler (see table 1)

The PDMS-polymer is formed by adding RTV-615B and RTV-615A, respectively crosslinker and prepolymer, in a weight ratio of 1/10. The polymer is prepared as an 15 vol% solution in chloroform, which is stirred at 70 °C for 1 hour. Silylated silica, prepared according to example 2, is then added to realize a 25 Wt% loading of the composite membrane after which the mixture is stirred for another hour at room temperature. The solution is cast then in a thoroughly cleaned petri dish from which the solvent is evaporated overnight. Final curing of the dried membrane is performed under vacuo at 150 °C during 45 minutes.

### Example 9: Composite membrane prepared according to the invention, containing a catalytic active compound as filler

The PDMS-polymer is formed by adding RTV-615 B and RTV-615A in a weight ratio of 1/10. The polymer is prepared as a 20 wt% solution in methylisobutylketone, which is first stirred at 70 °C for 1 hour. Ti-MCM-4l (Ti/Si = 52, prepared following Franke et al. (1994)) was pretreated for 1 hour at 150 °C under vacuo before it was added to the solution in a 15 wt% loading. Stirring was done in a ball mill during 20 minutes.

### Example 10: Pervaporation of aroma compounds using membranes prepared as reference systems

The membranes, prepared according to examples 3 and 4, are used in the pervaporation of an aqueous solution of aroma compounds. Pervaporation fluxes were obtained at 35 °C and normalized to a membrane thickness of 100 µm. The enrichment factor β (GC-analysis) is expressed as Wt% organics in permeate / Wt% organics in feed. Before applying the membranes in the pervaporation cell, they were immersed at 35 °C in a solution, with the same composition as the feed solution. Pervaporation was continued until about 1 gram of permeate was collected. A mixture of 8 aroma compounds in water, 10 ppm each, was used as feed solution: ethylacetate, isoamylacetate, valeraldehyde, hexanal, ethanol, isoamylalcohol, 2-hexanone and 2,3-butanedione (all in the highest purity available). The results are shown in table 1.

### Example 11: Pervaporation of aroma compounds using membranes prepared according to the invention

The membranes, prepared according to examples 5-8, are used in the pervaporation as described in example 10 but with a feed solution temperature of 40 °C.

**Table 1**

| Organic fluxes and water fluxes (g/m².h) for the membranes in the pervaporation of aroma compounds. Fluxes are normalized to a membrane thickness of 100 µm assuming inverse proportionality between flux and membrane thickness. The enrichment factor β is defined as (Wt% organics in the permeate)/(Wt% organics in the feed). | | | | |
|---|---|---|---|---|
| | | Organic flux | Water flux | β |
| Ex. 3 | **PDMS** | 7.3 | 66.4 | 124 |
| Ex. 4 | **PDMS + Silicalite** | 5.5 | 49.5 | 125 |
| Ex. 5 | **PDMS** | 10.2 | 41.2 | 248 |
| Ex. 6 | **PDMS + Silica** | 9.2 | 39.8 | 234 |
| Ex. 7 | **PDMS + Carbon black** | 9.6 | 28.0 | 319 |
| Ex. 8 | **PDMS + Silica + TMCS** | 9.1 | 24.6 | 337 |

### Example 12: Pervaporation of apolar compounds and polar compounds from the gas phase using membranes prepared according to the invention

Soil contaminated with fuel was purified by flushing an air stream through it. The air containing water and organic vapours was contacted with a hydrophobic membrane according to the invention to remove the organics. Increased fluxes were realised when using the filled PDMS-membranes, compared with the reference unfilled membrane.

### Example 13: Catalytic reaction using a membrane according to the invention

The Ti-MCM-4l filled PDMS-membrane (example 9) was used in the oxidation of 1-octene with tertiary butylhydroperoxide (70 wt% aqueous solution) to produce octene epoxide. 0.2 g of PDMS incorporated catalyst was added to 8 g of substrate and 4 g of substrate. Reaction was done at 56 °C during 24 hours. A reference reaction was performed using 0.2 g of catalyst powder, as well as a blanc reaction in which no catalyst was added. Conversion was improved from 4.33% to 5.27% upon incorporation in PDMS while the blanc reaction reached 1.78% conversion.

### REFERENCES

Mulder, M. (1991)Basic Principles of Membrane Technology, Kluwer.
Néel, J. (1991) Chapter 1 in Membrane Science an Technology Series, 1, Pervaporation Membrane Separation Processes, Ed. R.Y.M. Huang, Elsevier, Amsterdam 1-110.
Duval, J.-M (1991) PhD thesis, University of Twente, The Netherlands.
Barrer, R.M., James, S.D. (1960)J. Phys. Chem. 64, 1, 417-421.
te Hennepe, H.J.C., Mulder, M.H.V., Smolders, C.A., Bargeman, D., Schröder, G.A.T. (1986) EP 0,254,758 A1.
te Hennepe, J. (1988)PhD thesis, University of Twente, The Netherlands.
Paul, D.R., Kemp, D.R. (1973)J. Polym. Sci., Symposium No. 41,79-93.
Jia, M.-D., Peinemann, K.-V., Behling, R.-D. (1992) J. Mem. Sci, 73,119-128.
Jia, M.-D., Peinemann, K.-V., Behling, R.-D. (1991) J. Mem. Sci, 57,289-296.
Vankelecom, I.F.J., Scheppers, E., Heus, R., Uytterhoeven, J.-B. (1994)J. Phys. Chem., 98,12390-12396.
Lamer, T., Voiley, A., Beaumell, D., Marin,
M.(1992)Récents Prog. Génie Procédés, 3,21,419-424.
Vankelecom, I.F.J., Depré, D. De Beukelaar, S., Uytterhoeven, J.-B. (1995)J. Phys. Chem., 99,13193-13197.
Dotremont, C., Goethaert, S., Vandecasteele, C. (1995)Desalination, 91,177-186.
Sterzel, H.-J., Sanner, A. (1985) EP 0,154,248 A2.
Sterzel, H.-J., Sanner, A. (1990) US 4,973,606.
Kulprathipanja, S., Neuzil, R.W., Li, N.N. (1988a) US 4,740,219.
Kulprathipanja, S., Santi, F.E.W., Kulkarni, S.S., Chang, Y. (1988b) US 4,735,193.
Rojey, A., Deschamps, A., Grehier, A., Robert, E. (1989) EP 0,324,675 A1
Franke, J. Rathousky, G. Schulz-Ekloff, J. Starck, A. Zukal, Stud. Surf. Sci. Cat., 84, (1994), 77

## Claims

1. Method for preparing membranes containing a filler having pores in the meso and/or macro region, comprising the steps of:
i) providing a partially polymerized membrane matrix;
ii) adding the filler to the partially polymerized membrane matrix;
iii) forming a substantially homogenous distribution of the filler in the partially polymerized matrix;
iv) casting of the membrane; and
v) curing the membrane.

2. Method as claimed in claim 1, wherein the filler has a hydrophobic surface character.

3. Method as claimed in claim 2, wherein the filler is imparted with a hydrophobic surface character by treatment with a hydrophobic agent.

4. Method as claimed in claim 3, wherein the hydrophobic agent is a silylating agent.

5. Method as claimed in claim 4, wherein the partially polymerized membrane matrix is formed by partial polymerization of prepolymer and a crosslinker.

6. Method as claimed in claim 5, wherein the partial polymerization is carried out in a solvent which is removed prior to the curing step v.).

7. Method according to claim 1, wherein the filler has a catalytic character.

8. Method according to claim 7, wherein the filler is a titanium silicate.

9. Membrane obtainable with the method of claim 1-8.

10. Method for separating molecules from a liquid phase using a membrane of claim 9.

11. Method as claimed in claim 10, wherein the liquid phase is an aqueous phase and the molecules are organic compounds.

12. Method for separating molecules from a gas phase using a membrane of claim 9.

13. Method as claimed in claim 12, wherein the gas phase comprises polar and apolar compounds.

14. Membrane obtainable with the method of claims 7-8.

15. Method for carrying out a catalytic reaction using a membrane of claim 14.
